# EUROPÄISCHE PATENTSCHRIFT

(11) **EP 1 929 747 B1**
(45) Veröffentlichungstag und Bekanntmachung des Hinweises auf die Patenterteilung: **24.03.2010**
(21) Anmeldenummer: 06841258.4
(22) Anmeldetag: 24.08.2006
(51) Int. Cl.: H04L 29/06, H04L 12/56, H04M 1/65, H04L 29/08

(54) **VERFAHREN ZUR SPEICHERUNG UND WEITERLEITUNG VON MULTIMEDIA-NACHRICHTEN BEI MULTIMEDIA-ANRUFEN**
METHOD FOR STORING AND PASSING ON MULTIMEDIA MESSAGES FOR MULTIMEDIA CALLS
PROCÉDÉ DE MÉMORISATION ET DE TRANSMISSION DE MESSAGES MULTIMÉDIA EN CAS D APPELS MULTIMÉDIA

(30) Priorität: 21.09.2005 DE 102005045116
(43) Veröffentlichungstag der Anmeldung: 11.06.2008
(73) Patentinhaber: Nokia Siemens Networks GmbH & Co. KG, 81541 München (DE)
(72) Erfinder: CHARZINSKI, Joachim, 81825 München (DE); KLAUSBERGER, Walter, A-3424 Wolfpassing (AT); LANTERMANN, Jürgen, 81477 München (DE); SCHRODI, Karl, 82538 Geretsried (DE)
(86) Internationale Anmeldenummer: PCT/EP2006/065637
(87) Internationale Veröffentlichungsnummer: WO 2007/054386

(56) Entgegenhaltungen:
- WO-A-03/061242
- WO-A-03/079657
- WO-A-2005/027485

## Beschreibung

Die Erfindung betrifft ein Verfahren zur Weiterleitung und Speicherung von Multimedia-Nachrichten bei Multimedia-Anrufen in einem paketvermittelnden Telekommunikationsnetz, zu welchem ein angerufener Teilnehmer über einen Netzzugang mit bekannter und vorgegebener Bandbreite verfügt.

Der Begriff "Multimedia" bezeichnet im weitesten Sinne alle Anwendungen, in denen sich sinnvoll ergänzende Sprach-, Audio-, Text-, Stand- und Bewegtbildkommunikation integriert sind. Bei einer engeren Definition des Begriffes "Multimedia" gilt, dass mindestens drei unterschiedliche Inhalte wie beispielsweise Text, Bild oder Ton in einer Anwendung oder einem so genannten Multimedia-Dienst zum Einsatz kommen müssen. Solche Multimedia-Dienste sind z.B. Internetdienste wie beispielsweise das World Wide Web, etc. oder Video- oder Audio-Streaming, bei denen Video- bzw. Audio-Daten kontinuierlich übertragen werden.

Neben der immer stärkeren Nutzung des Internets - in Deutschland beispielsweise wurde 2004 laut dem Bericht "Informationstechnologie in Unternehmen und Haushalten 2004" des statistischen Bundesamtes das Internet von 60% der Bevölkerung genutzt - gilt die steigende Verbreitung von Multimedia-Diensten in der Telekommunikation als treibende Kraft hinter der Einführung neuer Technologien, von denen größere Bandbreiten für den Zugang zu einem Telekommunikationsnetz und für die Übertragung von Daten zu einem Teilnehmer zur Verfügung gestellt werden.

Für einen leitungsgebundenen Netzzugang - d.h. ein Teilnehmer ist über eine Zugangsleitung fest mit dem Telekommunikationsnetz verbunden - werden z.B. durch xDSL (Digital Subscriber Line)-Techniken, Kabelmodems, Glasfasertechnik, etc. ein Zugang mit größerer Bandbreite auf der Zugangsleitung des Teilnehmers - ein so genannter Breitband Access - zu einem Telekommunikationsnetz und somit die Nutzung von Multimedia-Diensten in guter Qualität ermöglicht.

Für einen drahtlosen Netzzugang über die so genannte "Luftschnittstelle" werden ebenfalls Technologien wie z.B. Universial Mobile Telecommunications System UMTS oder die Weiterentwicklung von UMTS - das so genannte Next Generation Network NGN im Mobilfunk, das auch als Mobilfunknetz der nächsten Generation bezeichnet wird, oder Wireless LAN angeboten, die für höhere Datenübertragungsraten optimiert sind. Durch diese Technologien wird die Nutzung von Multimedia-Diensten wie z.B. Videotelefonie oder Videostreaming oder der Zugang zum Internet in guter Qualität auch von mobilen Endgeräten wie z.B. Mobiltelefonen oder Laptops ermöglicht.

Da bei Multimedia-Diensten die multimedialen Daten wie beispielsweise Texte, Grafiken, Audio- oder Videosequenzen in digitaler Form vorausgesetzt werden, werden für Übertragung dieser Daten zu den Zugangsleitungen der Teilnehmer so genannte paketvermittelnde Telekommunikationsnetze eingesetzt, bei denen für eine Verbindung kein permanenter, durchgehender Kanal zur Verfügung gestellt wird, sondern die Daten in Form von Paketen übertragen werden.

Für die Steuerung der Datenübermittlung innerhalb eines paketvermittelnden Telekommunikationsnetzes zu den Teilnehmern werden Protokolle eingesetzt. Für die Übertragung von Daten, aber auch für die Nutzung von Multimedia-Diensten wird in paketvermittelnden Telekommunikationsnetzen häufig das Internet Protocol IP verwendet. Paketvermittelnde Telekommunikationsnetze, von denen das Internet Protokoll eingesetzt wird, werden daher auch oft als IP-basierte Telekommunikationsnetze bezeichnet. Das bekannteste IP-basierte Telekommunikationsnetz ist z.B. das Internet, wie die Gesamtheit aller miteinander verbundenen und das Internet Protokoll IP nutzenden Telekommunikationsnetze genannt wird. Mittlerweile werden IP-basierte Telekommunikationsnetz und damit das Internet Protocol auch für die Übertragung von Sprache - für die so genannte IP-Telefonie oder Voice-over-IP - eingesetzt. Im Gegensatz zu herkömmlicher Telefonie werden bei der IP-Telefonie die Sprachinformationen nicht über eine geschaltete Verbindung in einem Telekommunikationsnetz übertragen, sondern in Datenpakete aufgeteilt durch das Internet Protocol IP. Der weg durch das IP-basierte Telekommunikationsnetz, meist das Internet, ist dabei nicht festgelegt.

Da im Internet in seiner heutigen Form keine gesicherte Übertragungsqualität zwischen Teilnehmern garantiert wird, kann es bei der IP-Telefonie über das Internet zu Übertragungsverlusten und Aussetzern kommen. Allerdings kann beispielsweise durch eine Priorisierung von Sprachdatenpaketen - d.h. diese Datenpakete werden bei der Übertragung stärker bevorzugt als z.B. ein Herunterladen von Daten von einem Datenserver oder ein Aufrufen einer Internetseite - eine für direkte Kommunikation definierte Dienstgüte erzielt werden, bei welcher nur geringe Verzögerungen zugelassen sind. Die Dienstgüte in Telekommunikationsnetzen - auch als Quality-of-Service QoS bezeichnet - wird je nach dem Kommunikationsstandard (z.B. IP, UMTS, etc.) mittels etwas unterschiedlichen Parametern festgelegt und gemessen.

Neben der IP-Telefonie werden aber auch von einigen anderen Multimedia-Diensten wie z.B. Video- oder Audio-Streaming, Videotelefonie eine verzögerungsfreie und kontinuierliche Datenübertragung und eine hohe Quality-of-Service vorgesetzt. Deshalb ist für die Nutzung dieser Multimedia-Dienste sowie der IP-Telefonie in guter Qualität eine Mindestbandbreite erforderlich. Ist diese Mindestbandbreite nicht verfügbar, können diese Multimedia-Dienste nur in sehr schlechter Qualität oder gar nicht genutzt werden.

Wird nun von einem Teilnehmer beispielsweise bei der Nutzung eines Multimedia-Dienstes wie Video-Streaming die Bandbreite seines Netzzugangs durch die Datenübertragung fast vollständig belegt, so werden weitere ankommende Multimedia-Anrufe z.B. auf Basis der IP- oder Videotelefonie wegen mangelnder, verfügbarer Bandbreite abgewiesen. Von einem im paketvermittelnden Telekommunikationsnetz vorhandenem Ressourcenmanagement wird erkannt, dass die verfügbare Bandbreite für einen Multimedia-Anruf nicht ausreicht. Ein angerufener Teilnehmer kann daher von einem anrufenden Teilnehmer nicht erreicht werden und wird auch nicht über einen Versuch, zu ihm einen Multimedia-Anruf aufzubauen, informiert.

In Telekommunikationsnetzen, in den das so genannte Zeitmultiplex- oder Time Division Multiplex(TDM)-Verfahren eingesetzt wird, sind allerdings Funktionen wie beispielsweise "Anrufbeantworter im Netz" oder "Signalisierung eingehender Rufe über Internet Protocol IP" vorhanden, die eingesetzt werden, während die Verbindung zum Telekommunikationsnetz vom Teilnehmer für den Zugang zum Internet verwendet wird.

In paketvermittelnden Telekommunikationsnetz, insbesondere in IP-basierten Telekommunikationsnetzen, gibt es allerdings z.B. nur die Möglichkeit IP-basierte so genannte Voice-Mail-Systeme, die zentral im Telekommunikationsnetz zum Aufzeichnen von Sprachnachrichten vorhanden sind, einzusetzen, wenn der angerufenen Teilnehmer nicht erreicht werden kann, wie zum Beispiel in Dokument WO 2005027485 gezeigt wird. Von diesen Systemen wird dann eine Sprachnachricht per Datenübertragung an den angerufenen Teilnehmer übermittelt. Diese Vorgehensweise weist allerdings den Nachteil auf, dass die Sprachnachricht entweder mit der für eine verzögerungsfreie und kontinuierliche Datenübertragung notwendige Quality-of-Service bzw. Mindestbandbreite abgehört oder auf ein eigenes PC-artiges Endgeräte zum Abhören übertragen werden muss. Das Abhören dieser Sprachnachrichten ist daher nur möglich, wenn dem angerufenen Teilnehmer die entsprechende Bandbreite zur Verfügung steht und nicht beispielsweise durch die Nutzung eines Multimedia-Dienstes belegt ist.

Daher liegt der vorliegenden Erfindung die Aufgabe zugrunde, ein Verfahren anzugeben, durch welches ein angerufener Teilnehmer in einem paketvermittelnden Telekommunikationsnetz während der Nutzung eines Multimedia-Dienstes über einen Multimedia-Anruf informiert wird, der aufgrund der zu geringen, verfügbaren Bandbreite nicht direkt aufgebaut werden kann.

Die Lösung dieser Aufgabe erfolgt erfindungsgemäß durch ein Verfahren der eingangs erwähnten Art, durch welches in dem Fall, dass während des Aufbaus des Multimedia-Anrufes festgestellt wird, dass die verfügbare Bandbreite für den Multimedia-Anruf aufgrund einer gerade erfolgenden Nutzung eines weiteren Multimedia-Dienstes zu gering ist, der Multimedia-Anruf zu einer im Telekommunikationsnetz vorhandenen Aufzeichnungseinrichtung umgeleitet wird. Von einem anrufenden Teilnehmer wird dann eine Multimedia-Nachricht auf der Aufzeichnungseinrichtung im Telekommunikationsnetz hinterlassen. Diese Multimedia-Nachricht wird in der Folge über den Netzzugang unter Ausnutzung der noch verfügbaren Bandbreite an eine lokale Aufzeichnungseinrichtung des angerufenen Teilnehmers weitergeleitet und dann dem angerufenen Teilnehmer nach vollständiger Übertragung das Eintreffen der neuen Multimedia-Nachricht in der lokale Aufzeichnungseinrichtung angezeigt.

Der Hauptaspekt der erfindungsgemäß vorgeschlagenen Lösung besteht darin, dass ein mittels z.B. IP-Telefonie angerufener Teilnehmer, der durch die Nutzung eines Multimedia-Dienstes die Bandbreite seines Netzzugangs zum Großteil belegt hat, trotzdem über einen wegen zu geringer Bandbreite nicht aufbaubaren Multimedia-Anruf informiert wird. Von der im Telekommunikationsnetz vorhandenen Aufzeichnungseinrichtung wird dabei in vorteilhafter Weise eine Art Pufferfunktion zur Verfügung gestellt, durch die es ermöglicht wird, durch zeitliche Dehnung die noch verfügbare Bandbreite für die Übertragung der Multimedia-Nachricht an eine lokale Aufzeichnungseinrichtung auszunutzen.

Es ist vorteilhaft, wenn die Multimedia-Nachricht auf der Verbindung in Best-Effort-Modus an die lokale Aufzeichnungseinrichtung weitergeleitet wird, da beim Best-Effort-Modus in paketvermittelnden Telekommunikationsnetzen Datenpakete entsprechend noch freier Übertragungskapazitäten weitergeleitet werden. Als Best-Effort wird eine minimale Dienstgüte-Zusicherung in Telekommunikationsnetzen bezeichnet, bei der keine fehlerfreie und vollständige Übermittlung der Daten garantiert ist. Allerdings wird die Datenübertragung z.B. im Internet, wie in vielen IP-basierten Telekommunikationsnetzen, nach dem Best-Effort-Modus durchgeführt.

Des weiteren empfiehlt sich, wenn die vollständige Übertragung der Multimedia-Nachricht in die lokale Aufzeichnungseinrichtung dem angerufenen Teilnehmer mittels Licht- und/oder Tonsignal angezeigt wird. Auf diese einfache Weise kann der angerufene Teilnehmer während der Nutzung eines anderen Multimedia-Dienst auf die eingetroffene Multimedia-Nachricht aufmerksam gemacht werden und entsprechend reagieren.

Eine spezielle Ausführungsvariante des erfindungsgemäßen Verfahrens zeichnet sich dadurch aus, dass dem angerufenen Teilnehmer ein ankommender Multimedia-Anruf während der Nutzung des weiteren Multimedia-Dienstes signalisiert wird, so dass von ihm entschieden werden kann, ob der Multimedia-Anruf entgegengenommen wird. Damit besteht für den angerufenen Teilnehmer die Möglichkeit je nach Wichtigkeit des Multimedia-Anrufen zu entscheiden, ob von ihm der weitere Multimedia-Dienst unterbrochen oder beendet und der Multimedia-Anruf angenommen wird oder ob der Multimedia-Anruf auf eine Aufzeichnungseinrichtung umgeleitet wird, wenn der weitere Multimedia-Dienst von ihm nicht unterbrochen wird.

Es ist vorteilhaft, wenn der weitere Multimedia-Dienst derart unterbrochen wird, dass er von einem Zeitpunkt der Unterbrechung an vom angerufenen Teilnehmer nach Beendigung des Multimedia-Anrufes wieder fortgesetzt werden kann, weil somit der Multimedia-Dienst vom angerufenen Teilnehmer ohne Informationsverlust weitergenutzt werden kann.

Für die Realisierung dieser vorteilhaften Variante des erfindungsgemäßen Verfahrens empfiehlt sich beispielsweise für Multimedia-Dienste wie "Video-Streaming" oder "Audio-Streaming" eine Aufzeichnungseinrichtung für Streaming-Anwendungen mit entsprechender Kopplung zu einer Dienste-Signalisierung. Bei Unterbrechung des Multimedia-Dienstes wird die Aufzeichnungseinrichtung gestartet, damit nach Beendigung des Multimedia-Anrufes die Übertragung vom Zeitpunkt der Unterbrechung an wieder fortgesetzt werden kann. Weitere Realisierungsmöglichkeit dieser vorteilhaften Variante des erfindungsgemäßen Verfahrens, insbesondere bei Nutzung von Multimedia-Diensten wie "Video-Streaming" oder "Audio-Streaming" sind z.B. eine weitere Übertragung des Datenstreams mit entsprechend verringerter Rate an den angerufenen Teilnehmer mit so genannter on-the-fly-Umcodierung zu einer Ratenverringerung im Telekommunikationsnetz oder eine Verringerung der Übertragungsrate zum angerufenen Teilnehmer ohne Änderung einer Streaming-Rate. Bei letzterer Möglichkeit wird der ankommende Datenstream in einem Endgerät des angerufenen Teilnehmers und die Differenz der Rate im Telekommunikationsnetz gepuffert. Nach Beendigung des Multimedia-Anrufes kann vom angerufenen Teilnehmer der Streaming-Dienst weiterkonsumiert werden, wobei insgesamt wegen der teilweisen lokalen Pufferung der Daten vorteilhafter Weise weniger Speicherplatz und Performanz im paketvermittelnden Telekommunikationsnetz benötigt wird.

Bei einer vorteilhaften Fortbildung der Erfindung ist mittels eines zusätzlichen Eintrags in einer Einrichtung zur Verwaltung von Teilnehmerdaten für jeden Teilnehmer gespeichert, ob von diesem Teilnehmer eine lokale Aufzeichnungseinrichtung betrieben wird, und dass der Betrieb der lokalen Aufzeichnungseinrichtung mittels Dienst-Signalisierung angezeigt wird. Dadurch wird, wenn für den Aufbau eines Multimedia-Anrufes nicht genügend Bandbreite vorhanden ist, der anrufende Teilnehmer sofort auf die Aufzeichnungseinrichtung geschaltet, sofern von der Dienst-Signalisierung das Vorhandensein einer passenden Aufzeichnungseinrichtung beim angerufenen Teilnehmer angezeigt wird. Ist keine Aufzeichnungseinrichtung für den angerufenen Teilnehmer eingetragen, so wird dem anrufenden Teilnehmer z.B. mittels Besetzt-Signal angezeigt, dass der Netzzugang bzw. die Bandbreite des Netzzugangs des angerufenen Teilnehmers belegt ist.

Es ist außerdem günstig, wenn mittels eines zusätzlichen Eintrags in einer Einrichtung zur Verwaltung von Teilnehmerdaten für jeden Teilnehmer gespeichert wird, ob von diesem Teilnehmer eine lokale Aufzeichnungseinrichtung betrieben wird, dass dieser Eintrag lokal ausgewertet wird, und dass, wenn vom angerufenen Teilnehmer keine Aufzeichnungseinrichtung betrieben wird, der anrufende Teilnehmer zu einer beliebigen, im Telekommunikationsnetz vorhandenen Aufzeichnungseinrichtung weitergeleitet wird, weil in diesem Fall der anrufenden Teilnehmer bei zu geringer Bandbreite immer auf eine Aufzeichnungseinrichtung im paketvermittelnden Telekommunikationsnetz geschaltet wird. Die aufgezeichnete Multimedia-Nachricht wird dann an den angerufenen Teilnehmer übermittelt, wenn zwischen der Aufzeichnungseinrichtung und dem angerufenen Teilnehmer wieder die für die Übertragung notwendige Bandbreite vorhanden ist.

Eine zweckmäßige Weiterbildung der zuletzt angeführten Variante des erfindungsgemäßen Verfahrens besteht darin, dass der Multimedia-Anruf zu derjenigen Aufzeichnungseinrichtung im Telekommunikationsnetz umgeleitet wird, welche anhand einer Metrik als die dem angerufenen Teilnehmer im Telekommunikationsnetz am nächsten liegende Aufzeichnungseinrichtung ermittelt wird und zu welcher eine Verbindung im QoS-Modus möglich ist, wodurch der Multimedia-Anruf soweit wie möglich mit einer für kontinuierliche und verzögerungsfreie Datenübertragung notwendige Quality-of-Service QoS weitergeleitet wird und somit auf günstige weise die Wahrscheinlichkeit für eine erfolgreiche Zustellung der Multimedia-Nachricht von der Aufzeichnungseinrichtung an den angerufenen Teilnehmer maximiert wird. Als Parameter für die Metrik zum Ermitteln der dem angerufenen Teilnehmer im Telekommunikationsnetz am nächsten liegende Aufzeichnungseinrichtung können beispielsweise räumliche Distanz, Anzahl der Netzknoten, Routing-Distanz, Anzahl der dazwischen liegenden IP-basierten Telekommunikationsnetze, etc. verwendet werden.

Eine weitere, günstige Fortbildung ergibt sich, wenn der Multimedia-Anruf zu derjenigen Aufzeichnungseinrichtung umgeleitet wird, welche im Telekommunikationsnetz anhand einer Metrik als dem beim anrufenden Teilnehmer nahe liegend ermittelt wird. Dadurch werden für die Übermittlung der aufgezeichneten Multimedia-Nachricht auf einem Großteil der Übertragungsstrecke die Datenpakete nach dem Best-Effort-Prinzip übertragen, wodurch auf günstige Weise der nötige Aufwand an Ressourcen-Signalisierung minimiert und die Kosten für die Weiterleitung der Multimedia-Nachricht gering gehalten werden.

Zweckmäßigerweise wird der anrufende Teilnehmer über die Umleitung zur Aufzeichnungseinrichtung informiert und es kann dann von ihm entschieden werden, ob die Aufzeichnungseinrichtung von ihm genutzt wird. Diese Anfrage ist besonders dann sinnvoll, wenn die Aufzeichnungseinrichtung in Form eines kommerziellen Dienstes z.B. durch Einheben einer Extra-Gebühr angeboten wird. Dabei ist auch denkbar, dass beispielsweise die zu verwendende Aufzeichnungseinrichtung durch eine feste Zuordnung wie z.B. durch Subskription eines solchen Dienstes einem am Multimedia-Anruf beteiligten Teilnehmer - also entweder dem anrufenden oder dem angerufenen Teilnehmer vorgegeben ist. Es ist auch möglich, dass die Aufzeichnungseinrichtung von einem weiteren Teilnehmer im paketvermittelnden Telekommunikationsnetz den anderen Teilnehmer zur Verfügung gestellt wird, wobei zum Auffinden und zur Auswahl eines solchen Teilnehmers, von dem eine Aufzeichnungseinrichtung angeboten wird, beispielsweise Mechanismen und Regeln wie sie aus Peer-to-Peer-Netzen bekannt sind, eingesetzt werden können.

Das erfindungsgemäße Verfahren wird nachfolgend in beispielhafter Weise unter Bezugnahme auf die beigefügte Figur näher erläutert.

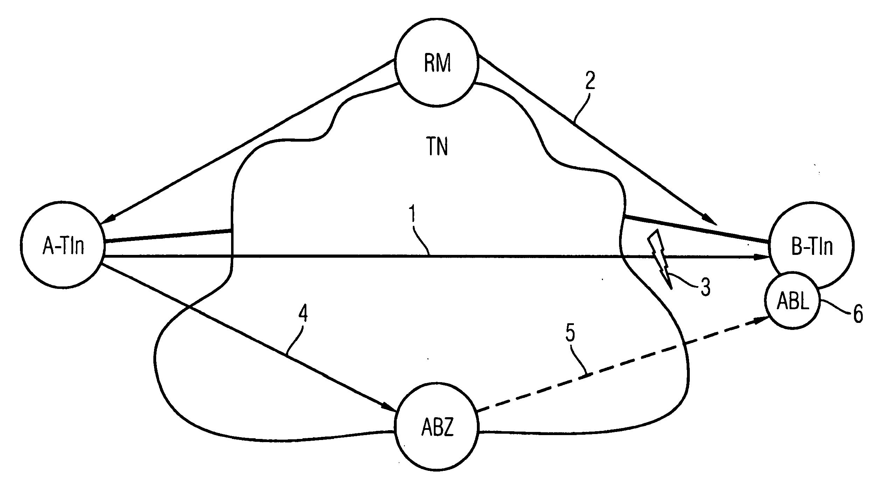

Figur 1 zeigt den beispielhaften Ablauf des erfindungsgemäßen Verfahrens in einem paketvermittelnden Telekommunikationsnetz TN. Diese Telekommunikationsnetz TN umfasst neben anderen Netzkomponenten, die aus Gründen einer einfacheren Darstellung in Figur 1 nicht eingetragen sind, eine Einrichtung RM für ein Management der Ressourcen und eine zentral im paketvermittelnden Telekommunikationsnetz TN vorhandene Aufzeichnungseinrichtung ABZ, beispielsweise ein zentral verfügbares Voice-Mail-System, Video Mail-System, etc. zum Aufzeichnen von Sprach- oder Multimedia-Nachrichten.

An das paketvermittelnde Telekommunikationsnetz TN sind über Zugangsleitungen mit bekannter und vorgegebener Bandbreite ein erster und ein zweiter Teilnehmer A-Tln, B-Tln angebunden. Es besteht aber auch die Möglichkeit, dass die Teilnehmer A-Tln, B-Tln drahtlos über einen Funkschnittstelle mit vorgegebener Datenübertragungsrate an das paketvermittelnde Telekommunikationsnetz TN angebunden sind. Zusätzlich wird vom zweiten Teilnehmer B-Tln über eine lokale Aufzeichnungseinrichtung ABL, z.B. einen Anrufbeantworter verfügt, in der Sprach- oder Multimedia-Nachrichten gespeichert werden können.

In einem ersten Schritt 1 wird nun vom ersten Teilnehmer A-Tln, der in der Folge auch als anrufender Teilnehmer A-Tln bezeichnet wird, versucht, den zweiten Teilnehmer B-Tln, der in der Folge auch angerufener Teilnehmer B-Tln genannt wird, über eine Multimedia-Anruf, z.B. mittels IP-Telefonie bzw. Voice-over-IP, zu erreichen.

In einem zweiten Schritt 2 wird von der Einrichtung RM für das Ressourcenmanagement geprüft, ob die für den Multimedia-Anruf notwendige Bandbreite auf den Netzgängen der beiden Teilnehmer A-Tln, B-Tln sowie im paketvermittelnden Telekommunikationsnetz TN verfügbar ist, um eine Quality-of-Service für eine verzögerungsfreie und kontinuierliche Datenübertragung zu garantieren. Da aber vom angerufenen Teilnehmer B-Tln gerade ein weiterer Multimedia-Dienst wie beispielsweise Video-Streaming genutzt wird, wird von der Einrichtung RM für das Ressourcenmanagement in einem dritten Schritt 3 festgestellt, dass ein Großteil der Bandbreite des Netzzugangs des angerufenen Teilnehmer B-Tln durch die Nutzung des weiteren Multimedia-Dienstes belegt und die noch verfügbare Bandbreite für den Aufbau des Multimedia-Anrufes nicht mehr ausreichend ist.

In einem vierten Schritt 4 wird daher der Multimedia-Anruf des anrufenden Teilnehmers A-Tln auf den im paketvermittelnden Telekommunikationsnetz TN verfügbare Aufzeichnungseinrichtung ABZ umgelenkt, damit vom anrufenden Teilnehmer A-Tln dort eine Sprach- oder Multimedia-Nachricht für den angerufenen Teilnehmer B-Tln hinterlassen werden kann. Es ist denkbar, dass der anrufende Teilnehmer A-Tln bei der Durchführung des vierten Schritts 4 über die Weiterleitung seines Multimedia-Anrufes zur Aufzeichnungseinrichtung ABZ informiert und dann gefragt wird, ob diese von ihm genutzt werden will.

Anschließend wird dann in einem fünften Schritt 5 die Sprach- oder Multimedia-Nachricht unter Ausnutzung der noch verfügbaren Bandbreite auf dem Netzzugang des angerufenen Teilnehmers B-Tln an die lokale Aufzeichnungseinrichtung ABL, die beim angerufenen Teilnehmer B-Tln untergebracht ist, weitergeleitet. In einem sechsten Schritt 6 wird dann dem angerufenen Teilnehmer B-Tln die vollständige Übertragung der Sprach- oder Multimedia-Nachricht an die lokale Aufzeichnungseinrichtung ABL durch ein Licht- oder Tonsignal angezeigt. Damit wird der angerufene Teilnehmer B-Tln über den Multimedia-Anruf, von dem er nicht erreicht wurde, informiert und die hinterlassene Multimedia-Nachricht kann von ihm entweder nach oder während der Nutzung des weiteren Multimedia-Dienstes lokal abgehört werden.

Als beispielhafte Erweiterung ist auch eine so genanntes Multi-hop Store-and-Forward-Übermittlung der Multimedia-Nachrichten zwischen anrufenden Teilnehmer A-Tln und angerufenen Teilnehmer B-Tln denkbar, da im paketvermittelnden Telekommunikationsnetz auch mehrere Aufzeichnungseinrichtungen ABZ untergebracht sein können. Bei einer Multi-hop Store-and-Forward-Übermittlung kann der Multimedia-Anruf des anrufenden Teilnehmers A-Tln auf eine Aufzeichnungseinrichtung ABZ umgelenkt werden, wenn beispielsweise irgendwo im paketvermittelnden Telekommunikationsnetz TN eine für den Multimedia-Anruf zu geringe Bandbreite festgestellt wird. Von dieser Aufzeichnungseinrichtung ABZ wird dann die Multimedia-Nachricht zu einer oder mehreren Aufzeichnungseinrichtungen weitergeleitet, bis schließlich die Aufzeichnungseinrichtung ABL des angerufenen Teilnehmers B-Tln erreicht wird.

## Patentansprüche

1. Verfahren zur Speicherung und Weiterleitung von Multimedia-Nachrichten bei einem Multimedia-Anruf in einem paketvermittelnden Telekommunikationsnetz (TN), wobei von einem angerufenen Teilnehmer (B-Tln) über einen Netzzugang mit bekannter und vorgegebener Bandbreite zum Telekommunikationsnetz (TN) verfügt wird , **dadurch gekennzeichnet, dass** in dem Fall, dass während des Aufbaus des Multimedia-Anrufes festgestellt wird (1), dass die verfügbare Bandbreite für den Multimedia-Anruf aufgrund einer gerade von dem angerufenen Teilnehmer (B-Tln.) erfolgenden Nutzung eines weiteren Multimedia-Dienstes zu gering ist (2,3), der Multimedia-Anruf zu einer im Telekommunikationsnetz (TN) vorhandenen Aufzeichnungseinrichtung (ABZ) umgeleitet wird (4),
- dass dann von einem anrufenden Teilnehmer (A-Tln) eine Multimedia-Nachricht auf der Aufzeichnungseinrichtung (ABZ) im Telekommunikationsnetz (TN) hinterlassen wird (4),
- dass dann die Multimedia-Nachricht über den Netzzugang unter Ausnutzung der noch verfügbaren Bandbreite an eine lokale Aufzeichnungseinrichtung (ABL) des angerufenen Teilnehmers (B-Tln) weitergeleitet wird (5),
- und dass dann dem angerufenen Teilnehmer (B-Tln) nach vollständiger Übertragung das Eintreffen der neuen Multimedia-Nachricht in der lokale Aufzeichnungseinrichtung (ABL) angezeigt wird (6).

2. Verfahren nach Anspruch 1, **dadurch gekennzeichnet, dass** die Multimedia-Nachricht auf der Verbindung in Best-Effort-Modus an die lokale Aufzeichnungseinrichtung (ABL) weitergeleitet wird (5).

3. Verfahren nach einem der Ansprüche 1 bis 2, **dadurch gekennzeichnet, dass** die vollständige Übertragung der Multimedia-Nachricht in die lokale Aufzeichnungseinrichtung (ABL)dem angerufenen Teilnehmer (B-Tln) mittels Licht- und/oder Tonsignal angezeigt wird (6).

4. Verfahren nach Anspruch 1, **dadurch gekennzeichnet, dass** dem angerufenen Teilnehmer (B-Tln) ein ankommender Multimedia-Anruf während der Nutzung des weiteren Multimedia-Dienstes signalisiert wird, so dass von ihm entschieden werden kann, ob der Multimedia-Anruf entgegengenommen wird.

5. Verfahren nach Anspruch 4, **dadurch gekennzeichnet, dass** der weitere Multimedia-Dienst derart unterbrochen wird, dass er von einem Zeitpunkt der Unterbrechung an vom angerufenen Teilnehmer (B-Tln) nach Beendigung des Multimedia-Anrufes wieder fortgesetzt werden kann.

6. Verfahren nach einem der Ansprüche 1 bis 4, **dadurch gekennzeichnet, dass** mittels eines zusätzlichen Eintrags in einer Einrichtung zur Verwaltung von Teilnehmerdaten für jeden Teilnehmer (A-Tln, B-Tln) gespeichert wird, ob von diesem Teilnehmer eine lokale Aufzeichnungseinrichtung (ABL) betrieben wird, und dass der Betrieb der lokalen Aufzeichnungseinrichtung (ABL) mittels Dienst-Signalisierung angezeigt wird.

7. Verfahren nach einem der Ansprüche 1-4, **dadurch gekennzeichnet, dass** der Multimedia-Anruf zu derjenigen Aufzeichnungs-einrichtung (ABZ) im Telekommunikationsnetz (TN) umgeleitet wird (4), welche anhand einer Metrik als die dem angerufenen Teilnehmer (B-Tln) im Telekommunikations-netz (TN) am nächsten liegende Aufzeichnungseinrichtung (ABZ) ermittelt wird und zu welcher eine Verbindung im QoS-Modus möglich ist.

8. Verfahren nach Anspruch 7, **dadurch gekennzeichnet dass** der Multimedia-Anruf zu derjenigen Aufzeichnungs-einrichtung (ABZ) umgeleitet wird (4), welche im Telekommunikationsnetz (TN) anhand einer Metrik als dem beim anrufenden Teilnehmer (A-Tln) nahe liegend ermittelt wird.

## Claims

1. Method for storing and forwarding multimedia messages for a multimedia call in a packet-switching telecommunication network (TN), wherein a called subscriber (B-Tln) is provided with a network access with a known and predetermined bandwidth to the telecommunication network (TN), **characterized in that** in the case where it is ascertained (1) during the setting up of the multimedia call that the available bandwidth is too narrow (2, 3) for the multimedia call owing to a further multimedia service currently being used by the called subscriber (B-Tln), the multimedia call is diverted (4) to a recording device (ABZ) present in the telecommunication network (TN),
- **in that** a calling subscriber (A-Tln) then leaves (4) a multimedia message on the recording device (ABZ) in the telecommunication network (TN),
- **in that** the multimedia message is then forwarded (5) to a local recording device (ABL) of the called subscriber (B-Tln) via the network access and using the bandwidth that is still available,
- and **in that** the arrival of the new multimedia message in the local recording device (ABL) is then indicated (6) to the called subscriber (B-Tln) after complete transmission.

2. Method according to Claim 1, **characterized in that** the multimedia message is forwarded (5) to the local recording device (ABL) on the connection in best effort mode.

3. Method according to any of Claims 1 to 2, **characterized in that** the complete transmission of the multimedia message into the local recording device (ABL) is indicated (6) to the called subscriber (B-Tln) by means of a light and/or sound signal.

4. Method according to Claim 1, **characterized in that** an incoming multimedia call is signaled to the called subscriber (B-Tln) during the use of the further multimedia service, such that said subscriber can decide whether to receive the multimedia call.

5. Method according to Claim 4, **characterized in that** the further multimedia service is interrupted in such a way that it can be resumed by the called subscriber (B-Tln) after the end of the multimedia call proceeding from a point in time of the interruption.

6. Method according to any of Claims 1 to 4, **characterized in that,** by means of an additional entry in a device for the management of subscriber data for each subscriber (A-Tln, B-Tln), the fact of whether a local recording device (ABL) is operated by said subscriber is stored, and **in that** the operation of the local recording device (ABL) is indicated by means of service signaling.

7. Method according to any of Claims 1 to 4, **characterized in that** the multimedia call is diverted (4) to that recording device (ABZ) in the telecommunication network (TN) which, on the basis of a metric, is determined as the recording device (ABZ) closest to the called subscriber (B-Tln) in the telecommunication network (TN) and to which a connection in the QoS mode is possible.

8. Method according to Claim 7, **characterized in that** the multimedia call is diverted (4) to that recording device (ABZ) which is determined as close to the calling subscriber (A-Tln) in the telecommunication network (TN) on the basis of a metric.

## Revendications

1. Procédé de mémorisation et de transfert de messages multimédia lors d'un appel multimédia dans un réseau de télécommunication (TN) à commutation de paquets, un abonné appelé (B-Tln) disposant d'un accès de réseau, à largeur de bande connue et prédéfinie, vers le réseau de télécommunication (TN), **caractérisé en ce qu'**en cas où il est constaté (1) pendant l'établissement de l'appel multimédia que la largeur de bande disponible est trop minime (2, 3) pour l'appel multimédia en raison d'une utilisation, se réalisant juste au même moment par l'abonné appelé (B-Tln), d'un autre service multimédia, l'appel multimédia est renvoyé (4) vers un autre dispositif d'enregistrement (ABZ) présent dans le réseau de télécommunication (TN),
- **en ce qu'**ensuite un message multimédia est laissé (4) dans le réseau de télécommunication sur le dispositif d'enregistrement (ABZ) par un abonné appelant (A-Tln),
- **en ce que** le message multimédia est ensuite transféré (5) à un dispositif d'enregistrement local (ABL) de l'abonné appelé (B-Tln) par l'intermédiaire de l'accès de réseau en exploitant la largeur de bande encore disponible,
- et **en ce que** l'entrée du nouveau message multimédia dans le dispositif d'enregistrement local (ABL) est ensuite indiquée (6) à l'abonné appelé (B-Tln) après l'achèvement de la transmission.

2. Procédé selon la revendication 1, **caractérisé en ce que** le message multimédia est transféré (5) au dispositif d'enregistrement local (ABL) sur la liaison en mode « best effort ».

3. Procédé selon l'une quelconque des revendications 1 à 2, **caractérisé en ce que** la transmission complète du message multimédia dans le dispositif d'enregistrement local (ABL) est indiquée (6) à l'abonné appelé (B-Tln) au moyen d'un signal lumineux et/ou d'un signal sonore.

4. Procédé selon la revendication 1, **caractérisé en ce qu'**un appel multimédia entrant est signalé à l'abonné appelé (B-Tln) pendant l'exploitation de l'autre service multimédia, de sorte qu'il peut décider si l'appel multimédia est accepté.

5. Procédé selon la revendication 4, **caractérisé en ce que** l'autre service multimédia est interrompu de manière à ce qu'il puisse être de nouveau poursuivi, à partir d'un moment de l'interruption, par l'abonné appelé (B-Tln) après la fin de l'appel multimédia.

6. Procédé selon l'une quelconque des revendications 1 à 4, **caractérisé en ce qu'**au moyen d'une entrée supplémentaire dans un dispositif destiné à gérer des données d'abonné, il est mémorisé pour chaque abonné (A-Tln, B-Tln) si un dispositif d'enregistrement local (ABL) est exploité par cet abonné, et **en ce que** l'exploitation du dispositif d'enregistrement local (ABL) est indiquée au moyen d'une signalisation de service.

7. Procédé selon l'une quelconque des revendications 1 à 4, **caractérisé en ce que** l'appel multimédia est renvoyé (4) dans le réseau de communication (TN) vers le dispositif d'enregistrement (ABZ), lequel, à l'aide d'une métrique, est détecté comme le dispositif d'enregistrement (ABZ) situé le plus proche de l'abonné appelé (B-Tln) dans le réseau de télécommunication (TN) et vers lequel une liaison en mode QoS est possible.

8. Procédé selon la revendication 7, **caractérisé en ce que** l'appel multimédia est renvoyé (4) vers le dispositif d'enregistrement (ABZ), lequel, à l'aide d'une métrique, est détecté dans le réseau de télécommunication (TN) comme celui situé à proximité de l'abonné appelant (A-Tln).
